# EUROPEAN PATENT APPLICATION

(11) **EP 1 985 186 A1**
(43) Date of publication of application: **29.10.2008**
(21) Application number: 07425246.1
(22) Date of filing: 27.04.2007
(51) Int. Cl.: A22C 17/00

(54) **Packed cured ham and method for producing it**

(71) Applicant: Bedani s.r.l., 44047 Sant'Agostino (San Carlo) (FE) (IT)
(72) Inventor: Bedani, Giorgio, 44047 Sant'Agostino, Frazione San Carlo (FE) (IT); Bedani, Arturo, 44047 Sant'Agostino, Frazione San Carlo (FE) (IT)
(74) Representative: Alagem Modiano, Lara S.

(57) **Abstract**

A packed cured ham, comprising a single compact, boned and derinded piece (2) of a cured ham (P) which is substantially elongated with a substantial axial symmetry and is contained in a casing (3), each portion of the outer surface of the single piece (2) being in contact with a respective portion of the internal surface of the casing (3), the casing being adapted to keep the at least one single piece (2) compact.

## Description

The present invention relates to a packed cured ham and to a method for producing it.

In the fields of catering, marketing and distribution of food products, with particular reference to pork meat products, there is an ever growing demand for boned and cured raw hams which have substantially regular shapes and predefined dimensions.

The use of these hams is mainly due to the ease and speed of preparation of food by assigned personnel, even if such personnel is not expert and/or non-specialized, working in mass distribution (supermarkets and the like) and in public establishments such as bars, pubs, catering venues, and the like.

Ham can be sold either sliced, in a tray, or as a packed pear-shaped cut to be sliced in bars, catering venues or among over-the-counter products in hypermarket ranges.

Another advantage is that the operator can know approximately how many portions (for example for sandwiches or other food, for prepacked ham trays, and the like) he/she can prepare starting from a ham having a substantially regular shape and therefore having predefined dimensions and weight.

Hams are known which have a substantially prism-like shape such as a block, obtained by pressing the ham in appropriately provided machines: the cured ham, after being cleaned, boned and derinded, is pressed within appropriately provided molds which are substantially prism-shaped, so that the flaps of meat that have been parted due to boning are folded and compacted into a single block.

However, in order to ensure the necessary compactness of hams thus shaped, especially at the region where the bone has been removed, it is necessary to store them and then freeze them: at above-freezing temperatures, the flaps formed by boning (folded and pressed by the machine) in fact tend to mutually separate.

Further, it is evident that freezing during the processing of hams of the known block type entails high costs in terms of energy consumption. Moreover, again due to freezing, the original organoleptic qualities and flavors of the ham are lost.

The aim of the present invention is to solve the problems noted above, by providing a packed cured ham and a method for producing it, which can be maintained and processed at higher temperatures, with a reduction in costs in terms of energy consumption and without the occurrence of deterioration and/or cutting problems thereof, further preventing any flaps from parting.

Within this aim, an object of the invention is to provide a packed cured ham which by virtue of its particular constructive characteristics is capable of giving the greatest assurances of reliability and safety in use.

Another object of the present invention is to provide a packed cured ham which has a simple structure, is relatively easy to provide in practice, effective in operation and further competitive from an economic standpoint.

This aim and these and other objects which will become better apparent hereinafter are achieved by a packed cured ham, characterized in that it comprises a single compact, boned and derinded piece of cured ham which has a substantially elongated shape with substantial axial symmetry and is contained in a casing, every portion of the outer surface of said single piece being in contact with a respective portion of the internal surface of said casing, said casing being adapted to keep said at least one single piece compact.

Further characteristics and advantages of the invention will become better apparent from the following detailed description of a preferred but not exclusive embodiment of a packed cured ham according to the invention, illustrated by way of non-limiting example in the accompanying drawings, wherein:

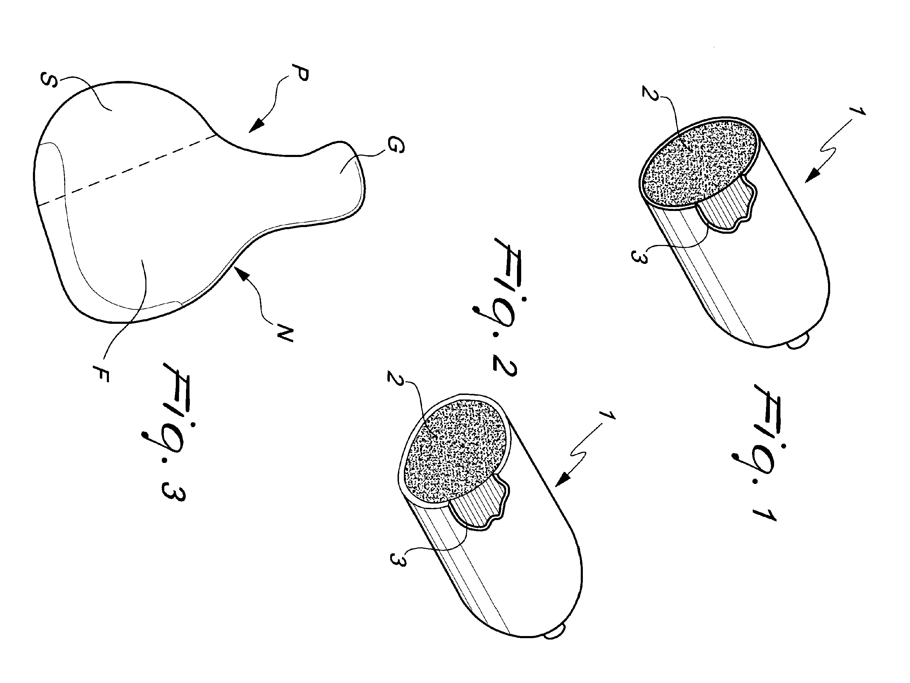

Figure 1 is a perspective view of a portion of a first embodiment of a packed cured ham according to the invention;
Figure 2 is a perspective view of a portion of a second embodiment of a packed cured ham according to the invention;
Figure 3 is a schematic side view of a bone-in cured raw ham.

With reference to the figures, the reference numeral 1 generally designates a packed cured ham according to the invention.

The packed cured ham 1 comprises a single compact, boned and derinded piece 2 of a cured ham P which has a substantially elongated shape with a substantial axial symmetry and is contained in a casing 3; every portion of the outer surface of the single piece 2 is in contact with a respective portion of the internal surface of the casing 3; advantageously, the casing 3 is adapted to keep the at least one single piece 2 compact.

In greater detail, the single piece 2 can be constituted by a so-called pear cut N of the ham P, which comprises a butt F and a shank G.

In another embodiment, the single piece 2 of the packed ham 1 can be constituted by the entire boned ham P.

In another embodiment, the single piece 2 of the packed ham 1 can be constituted only by the butt F of the ham P, and in another embodiment it can be constituted only by the single false pear cut S.

The casing 3 which contains the single compact piece 2 is conveniently made of synthetic material for food use.

The method for producing the packed ham 1 consists in performing in succession the following steps: first of all, the cured ham P is cleaned and in particular the pork fat arranged to cover the part without rind is removed.

Then the ham P is boned, removing its rind, small bone and femoral bone, and a substantially elongated shape with substantial axial symmetry is given to at least one single piece 2 of the ham P. The single piece 2 is then inserted in the casing 3 and the packed ham 1 is closed at its ends.

In further embodiments of the packed ham 1, after cleaning and boning the cured ham P, removing its rind, small bone and femoral bone, the thick flank of the ham P, known as false pear cut S of the ham P, is removed by cutting from the remaining part of the ham P, which is indeed known as pear N and comprises, as mentioned, the butt F and the shank G.

A substantially elongated shape with substantially axial symmetry is then given to at least one single piece 2 of the ham P. The single piece 2 is then inserted in the casing 3 and the packed ham 1 is closed at the ends.

The single piece 2 can therefore be constituted, for respective embodiments, by the whole pear cut N, only by the butt F and also only by the false pear cut S.

Favorably, the single piece 2 of the ham P is pressed in a mold which is adapted to give it said substantially elongated shape with substantial axial symmetry, for example cylindrical.

In further embodiments, the single piece 2, particularly if it is constituted by the butt F alone, is pressed in a mold which is adapted to give it a shape which has a substantially elliptical irregular cross-section, so as to avoid excessive deformation of the fatty part, in order to ensure an optimum aesthetic effect of the packed ham 1.

For the preservation of the packed ham 1, it is important that no air remains between the single piece 2 and the casing 3, and therefore the method for producing the packed ham 1 comprises a step for expelling the air, which occurs directly during the step of insertion of the single piece 2 in the casing 3 or after this last step.

Optionally, the false pear cut S, if it is not used to provide the respective packed ham 1, is marketed separately, for example in packaged portions; the same occurs for the shank G if only the butt F is used to produce the packed ham 1.

Further, it is noted that differently from cured butts which are already commercially available, i.e., butts which are taken directly from the whole haunch of the slaughtered pig and subsequently processed and cured individually without the femoral bone, positively the packed ham 1 according to the invention is produced starting from the cured raw ham P, i.e., a ham which has been cured with the bone, positively retaining all the flavors and organoleptic qualities thereof.

It is stressed that the trade designation "prosciutto crudo stagionato" ("cured raw ham") is regulated in Italy by the Italian national decree of the Ministry of Productive Activities dated 21 September 2005 and related to "Regulation of the production and sale of certain delicatessen products (Official Gazette no. 231 dated 4 October 2005)": with this statutory provision, Italy regulates, among others, the use of the trade designation "prosciutto crudo stagionato" ("cured raw ham"), binding it to compliance with specified minimum requirements and defining the characteristics that the products must possess in order to be able to use the protected designations.

In particular, in section II of said decree, article 10 states:
1.The generic designation "prosciutto crudo stagionato" ("cured raw ham") is used for the meat product which is cured, not smoked, obtained from hog haunches by a traditional method [...]
2.The meat used as raw material is constituted by the whole haunch of the pig, which comprises the bone base which remains after removing the hock.
3. [...]

Moreover, as also stated in the same decree, the cured raw ham can be sold whole, boned, in portions and sliced.

Advantageously, the packed ham 1 having a substantially elongated shape with substantial axial symmetry comprises a single compact piece 2, which is enclosed in the casing 3, and therefore can be positively preserved and sliced at higher temperatures than needed for hams of the known block type, with evident advantages in terms of energy consumption and convenience of preservation and processing. For the same reasons, it keeps unchanged the flavors and organoleptic qualities of the cured ham P. The packed ham 1 can be sliced easily even by an unspecialized and/or unskilled operator, who in view of the substantially predefined dimensions of the packed ham 1 can obtain from it approximately a certain number of portions (for example for sandwiches or other food).

Moreover, the casing 3 favorably protects the single piece 2, since it is removed gradually as the packed ham is sliced, allowing to preserve it for a long period and store it for example in a refrigerator to be eaten even a small amount at a time.

In practice it has been found that the invention fully achieves the intended aim and objects.

The invention thus conceived is susceptible of numerous modifications and variations, all of which are within the scope of the appended claims; all the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and dimensions, may be any according to requirements and to the state of the art without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for producing a packed cured ham, **characterized in that** it performs in succession the following steps: cleaning a cured ham (P), completely boning said cured ham (P), removing its rind, small bone and femoral bone, giving a substantially elongated shape with substantial axial symmetry to at least one single piece (2) of said ham (P), inserting said single piece (2) in a casing (3), and closing the packed ham (1).

2. A method for producing a packed cured ham, **characterized in that** it comprises in succession the following steps: cleaning a cured ham (P), completely boning said cured ham (P), removing the rind, small bone and femoral bone, separating by cutting the thick flank of the ham (P), known as false pear cut (S) of the ham (P), from the remaining part of said cured ham (P), known as pear cut (N) of the ham (P) and comprising the butt (F) and the shank (G), giving a substantially elongated shape with substantial axial symmetry to at least one single piece (2) of said pear cut (N), inserting said single piece (2) in a casing (3), and closing the packed ham (1).

3. The method according to claim 1, **characterized in that** said single piece (2) is constituted by said whole cleaned, boned and derinded ham (P).

4. The method according to one or more of the preceding claims, **characterized in that** said single piece (2) is constituted by at least said butt (F).

5. The method according to one or more of the preceding claims, **characterized in that** said single piece (2) is constituted by said pear cut (N).

6. The method according to one or more of the preceding claims, **characterized in that** said single piece (2) is constituted by at least said false pear cut (S).

7. The method according to one or more of the preceding claims, **characterized in that** said single piece (2) is pressed in a mold which is adapted to give it a substantially cylindrical shape.

8. The method according to one or more of the preceding claims,
**characterized in that** said single piece (2) is pressed in a mold which is adapted to give it a substantially elliptical irregular transverse cross-section.

9. The method according to one or more of the preceding claims, **characterized in that** it comprises a step for expelling the air between said single substantially cylindrical piece (2) and said casing (3) during the step of insertion of said single piece (2) in said casing (3).

10. The method according to one or more of the preceding claims, **characterized in that** it comprises a step for expelling the air between said single substantially cylindrical piece (2) and said casing (3) after the step for insertion of said single piece (2) in said casing (3).

11. A packed cured ham, **characterized in that** it is obtained with the method according to one or more of the preceding claims.

12. The packed cured ham according to claim 11, **characterized in that** it comprises a single compact, boned and derinded piece (2) of a cured ham (P), which has a substantially elongated shape with substantial axial symmetry and is contained in a casing (3), each portion of the outer surface of said single piece (2) being in contact with a respective portion of the internal surface of said casing (3), said casing being adapted to keep said at least one piece (2) compact.

13. The packed ham according to one or more of the preceding claims, **characterized in that** said single piece (2) is substantially cylindrical.

14. The packed ham according to one or more of the preceding claims, **characterized in that** said single piece (2) has a substantially elliptical irregular transverse cross-section.

15. The packed ham according to one or more of the preceding claims, **characterized in that** said single piece (2) comprises said whole cleaned, boned and derinded ham (P).

16. The packed ham according to one or more of the preceding claims, **characterized in that** said single piece (2) comprises at least said butt (F).

17. The packed ham according to claim 8, **characterized in that** said single piece (2) comprises at least said false pear cut (S).

18. The packed ham according to one or more of the preceding claims, **characterized in that** said single piece (2) comprises said pear cut (N) of the ham (P).

19. The packed ham according to one or more of the preceding claims, **characterized in that** said casing (3) is made of synthetic material for food use.
